# EUROPÄISCHE PATENTSCHRIFT

(11) **EP 3 315 361 B1**
(45) Veröffentlichungstag und Bekanntmachung des Hinweises auf die Patenterteilung: **10.07.2019**
(21) Anmeldenummer: 17195702.0
(22) Anmeldetag: 10.10.2017
(51) Int. Cl.: B60R 1/00

(54) **KUNSTSTOFF-BAUTEIL FÜR EIN KRAFTFAHRZEUG SOWIE VERFAHREN ZUM ZUSCHNEIDEN EINES KLEBEBANDES AUF EINEM KUNSTSTOFF-BAUTEIL**
PLASTIC COMPONENT FOR A MOTOR VEHICLE AND METHOD FOR CUTTING AN ADHESIVE TAPE ON A PLASTIC COMPONENT
COMPOSANT EN MATIÈRE PLASTIQUE POUR UN VÉHICULE AUTOMOBILE AINSI QUE PROCÉDÉ DE DÉCOUPE D'UNE BANDE ADHÉSIVE SUR UN COMPOSANT EN MATIÈRE PLASTIQUE

(30) Priorität: 26.10.2016 DE 102016120390
(43) Veröffentlichungstag der Anmeldung: 02.05.2018
(73) Patentinhaber: REHAU AG + Co, 95111 Rehau (DE)
(72) Erfinder: Vogel, Matthias, 95233 Helmbrechts (DE); Wurdack, Michael, 95666 Mitterteich (DE)

(56) Entgegenhaltungen:
- DE-A1-102005 033 351
- JP-A- 2004 359 062

## Beschreibung

Kunststoff-Bauteile für Kraftfahrzeuge können aus verschiedenen Gründen mit einem Klebeband versehen sein. Zum einen kann das Klebeband zum Verbinden mit angrenzenden Karosseriebauteilen oder mit anderen Kunststoff-Bauteilen dienen oder die Klebebänder übernehmen eine Dichtfunktion und/oder eine Dämpfungsfunktion.

Aus dem Stand der Technik gibt es mehrere bekannte Möglichkeiten derartige Klebebänder auf einer Funktionsoberfläche eines Grundkörpers des Kunststoff-Bauteils aufzubringen. Bei sehr großen Stückzahlen übernimmt das Aufbringen des Klebebandes eine Maschine bzw. ein Roboter, sodass hinsichtlich der Positionierung und des Zuschnitts des Klebebandes hierbei in der Regel keine Probleme auftreten. Wie erläutert, rechnen sich derartige Maschinen jedoch nur bei großen Stückzahlen, sodass bei Kleinserien oder bei einer hohen Variantenvielfalt weiterhin das manuelle Aufbringen des Klebebandes üblich ist.

Hierbei schneidet ein Arbeiter bzw. eine Arbeiterin freihändig das Klebeband auf Maß sobald das Klebeband mit der Funktionsoberfläche verbunden ist. Dieser Vorgang ist ausgenommen unpräzise und führt nicht selten zur Beschädigung des Kunststoff-Bauteils, sodass dieses aus Qualitätsgründen verworfen werden muss. Als eine Lösung haben sich deshalb sogenannte Schnittschablonen etabliert. Dabei wird das entsprechende Kunststoff-Bauteil in einer Fixiereinrichtung positionsgenau lagefixiert, das Klebeband aufgebracht und anschließend die Schnittschablone auf das Kunststoff-Bauteil gelegt, damit ein präziser und wiederholgenauer Zuschnitt des Klebebandes erfolgen kann. Diese Möglichkeit benötigt jedoch ebenfalls eine hohe Investition, ist zeitaufwendig und zudem mitunter so umständlich, dass der entsprechende Arbeiter bzw. die entsprechende Arbeiterin auf die Schnittschablone verzichtet und erneut freihändig arbeitet.

Ein gattungsgemäßes Kunststoff-Bauteil ist der Offenlegung JP 2004 359 062 A zu entnehmen.

Aufgabe der vorliegenden Erfindung ist es daher ein Kunststoff-Bauteil für ein Kraftfahrzeug, sowie ein Verfahren zum Zuschneiden eines Klebebandes auf einem Kunststoff-Bauteil für ein Kraftfahrzeug anzugeben, welches ein positioniergenaues, zuverlässig wiederholbares und schnelles Zuschneiden eines auf dem Kunststoff-Bauteil befindlichen Klebebandes ermöglicht.

Diese Aufgabe wird erfindungsgemäß gelöst durch die Merkmale des Anspruchs 1 gelöst.

Durch das erfindungsgemäße einstückige Ausbilden einer integrierten Schnittschablone in den Grundkörper des Kunststoff-Bauteils kann auf einfache und kostengünstige Weise eine immer an der konstant gleichen Stelle, und eine bereits mit Herstellung des Kunststoff-Bauteils urgeformte, Schnittschablone ausgebildet werden, welche einen positioniergenauen, zuverlässigen und schnellen Zuschnitt des Klebebandes ermöglicht. Die rinnenförmige Ausnehmung dient hierbei zur Aufnahme des Schneidelements einer Schneidvorrichtung (z.B. einer Klingenspitze eines Schnittmessers), wobei die Ausnehmung gleichzeitig dafür sorgt, dass während des Zuschnitts durch die Schneidvorrichtung das Klebeband in die selbige Ausnehmung gepresst wird und - entgegen dem bis dato freihändigen Zuschnitt - auch bei einer stumpf gewordenen Schneidvorrichtung das Klebeband nicht mitgezogen und depositioniert werden kann. Die an die Ausnehmung angrenzende Ausformung dient als Orientierung für den Arbeiter bzw. die Arbeiterin, da das an dieser Stelle aufgewölbte Klebeband die Ausnehmung - und somit die Schnittstelle - anzeigt. Gleichzeitig fungiert die Ausformung darüber hinaus als seitlicher Anschlag für die Schneidvorrichtung (z.B. die Messerklinge) und sorgt zuverlässig dafür, dass das Schneidelement der Schneidvorrichtung in die Ausformung gelenkt wird.

Die Ausnehmung kann den Grundkörper vollständig durchsetzen oder bis zu einer gewissen Tiefe in den Grundkörper hineinreichen.

Das Kunststoff-Bauteil für ein Kraftfahrzeug kann eine Radlaufblende, eine Zierleiste, ein Zierelement, ein Türkantenschutz, ein Türunterkantenschutz, eine Abdeckleiste, eine Säulenblende, eine Seitenschutzleiste, eine Schwellerverkleidung, eine Stoßfängerverkleidung, eine Türverkleidung, eine Heckklappe, ein Kotflügel, ein Spoiler, eine Dachbeplankung, eine Halteschiene, eine Dichtungsleiste, eine Wasserkastenabdeckung, ein Verstärkungsteil für eine Radlaufblende, ein Verstärkungsteil für eine Zierleiste, ein Verstärkungsteil für ein Zierelement, ein Verstärkungsteil für einen Türkantenschutz, ein Verstärkungsteil für einen Türunterkantenschutz, ein Verstärkungsteil für eine Abdeckleiste, ein Verstärkungsteil für eine Säulenblende, ein Verstärkungsteil für eine Seitenschutzleiste, ein Verstärkungsteil für eine Schwellerverkleidung, ein Verstärkungsteil für eine Stoßfängerverkleidung, ein Verstärkungsteil für eine Türverkleidung, ein Verstärkungsteil für eine Heccklappe, ein Verstärkungsteil für einen Kotflügel, ein Verstärkungsteil für einen Spoiler, ein Verstärkungsteil für eine Dachbeplankung, ein Verstärkungsteil für eine Halteschiene, ein Verstärkungsteil für eine Dichtungsleiste oder ein Verstärkungsteil für eine Wasserkastenabdeckung sein.

Das Klebeband kann bevorzugt eine einseitige oder eine doppelseitige Klebefläche und/oder wenigstens eine Schaumschicht umfassen. Eine Schaumschicht ist insbesondere bei Klebebändern mit Dichtfunktion und/oder Dämmfunktion gegenüber angrenzenden Karosserieteilen des Kraftfahrzeuges oder gegenüber weiteren angrenzenden Kunststoff-Bauteilen vorgesehen.

Auf der dem Grundkörper abgewandten Seite des Klebebands kann zusätzlich ein Funktionselement, insbesondere ein Dichtungselement, aufgebracht oder einstückig angeformt sein.

Die Tiefe der rinnenförmigen Ausnehmung kann zwischen 10% bis 80%, vorzugsweise zwischen 15% bis 60%, weiter vorzugsweise zwischen 20% bis 50% der Dicke des Grundkörpers vor der Ausnehmung entsprechen. Selbstredend ist hierbei nicht die verbleibende Restdicke des Grundkörpers unterhalb der Ausnehmung gemeint, sondern die neben der Ausnehmung gemessene Dicke des Grundkörpers. Alternativ kann die Ausnehmung den Grundkörper vollständig durchsetzen.

Die Steghöhe der Ausformung kann zwischen 20% bis 80%, vorzugsweise zwischen 30% bis 50% der Dicke des vorgesehenen Klebebandes entsprechen.

Der Abstand zwischen der Ausnehmung und der Ausformung beträgt erfindungsgemäß höchstens 15 mm, besonders bevorzugt höchstens 10 mm, weiter bevorzugt höchstens 5 mm. Bei einem größer werdenden Abstand besteht ansonsten die Gefahr, dass die Ausformung nicht mehr zuverlässig zur Orientierung und als Anschlag für die angrenzende Ausnehmung funktionieren kann.

Der Grundkörper ist bevorzugt in einem Kunststoff-Spritzgussverfahren einstückig oder in einem generativen Fertigungsverfahren einstückig ausgebildet.

Das Material des Grundkörpers kann Polysulfon (PSU), Poly(ethersulfon) (PES), Polyetherimid (PEI), Poly(phenylensulfid) (PPS), Polyphenylensulfon (PPSU), Polyetheretherketon (PEEK), Polyetherketone (PEK), Polyamidimid (PAI), Poly-m-phenylenisophthalamid (PMI), Polyphthalamide (PPA), Polybenzimidazole (PBI), Polytetrafluorethylen (PTFE), Perfluoralkoxylalkan (PFA), Polyoxymethylen (POM), Polyamid (PA), Polyethylenterephthalat (PET), Polybutylenterephtalat (PBT), Polymethylmethacrylat (PMMA), Polystyrol (PS), Syndiotaktisches Polystyrol (sPS), Polycarbonat (PC), Styrol-Acrylnitril-Copolymer (SAN), Polyphenylenether (PPE), Ethylen-Propylen-Dien-Kautschuk (EPDM), Acrylnitril-Butadien-Styrol (ABS), Polylactat (PLA), Polyethylen (PE), Polypropylen (PP), Polyvinylchlorid (PVC) oder Mischungen der vorgenannten Materialen umfassen.

Weiterhin Teil der Erfindung ist ein Verfahren nach Anspruch 7, zum Zuschneiden eines Klebebandes auf einem Kunststoff-Bauteil. Das Verfahren ist wie folgt charakterisiert:
Verfahren zum Zuschneiden eines Klebebandes auf einem Kunststoff-Bauteil für ein Kraftfahrzeug, wobei das Kunststoff-Bauteil einen Grundkörper mit einer Dicke und mit einer frei zugänglichen Funktionsoberfläche, die so ausgebildet ist, dass ein Klebeband entlang dieser Funktionsoberfläche aufklebbar und mit der Funktionsoberfläche verbindbar ist, aufweist und wobei der Grundkörper im Bereich der Funktionsoberfläche eine sich von der Funktionsoberfläche nach innen in den Grundkörper erstreckende rinnenförmige Ausnehmung und eine sich von der Funktionsoberfläche nach außen erstreckende stegförmige Ausformung aufweist, wobei die Ausnehmung und die Ausformung aneinander angrenzen und einstückig mit dem Grundkörper ausgebildet sind, sodass diese zusammen eine in den Grundkörper integrierte Schnittschablone für das Klebeband bilden, wobei der Abstand zwischen der Ausnehmung (3) und der Ausformung (4) höchstens 15 mm beträgt. umfassend die folgenden Schritte:
- Aufkleben eines Klebebandes entlang der Funktionsoberfläche und Verbinden des Klebebandes mit der Funktionsoberfläche, wobei das Klebeband die Ausnehmung und die Ausformung überlappt,
- Positionieren einer Schneidvorrichtung auf oder über dem Klebeband oberhalb der Stelle der Ausnehmung und neben der durch die Ausformung verursachten und nach außen gerichteten Wölbung des Klebebandes,
- Abtrennen des überlappenden Abschnitts des Klebebandes mittels der Schneidvorrichtung durch die Verlagerung des Schneidelements der Schneidvorrichtung bis in die Ausnehmung hinein,
- Entfernen des abgetrennten überlappenden Abschnitts des Klebebandes.

Bei dem vorgenannten Verfahren kann das Kunststoff-Bauteil wie vorstehend im Detail beschrieben ausgebildet sein.

Im Folgenden wird die Erfindung anhand lediglich Ausführungsbeispiele darstellender Zeichnungen erläutert. Es zeigen schematisch:
- Fig. 1:: eine Draufsicht auf ein erfindungsgemäßes Kunststoff-Bauteil in Form eines Verstärkungsteils für einen Spoiler, sowie zwei Detaildarstellungen des Kunststoff-Bauteils;
- Fig. 2:: ein Kunststoff-Bauteil in Form eines Verstärkungsteils für eine Radlaufblende, sowie eine Detaildarstellung;
- Fig. 3a bis 3c:: Querschnittsdarstellungen gemäß den Schnittlinien B-B in Fig. 1 und Fig. 2, sowie den Ablauf des erfindungsgemäßen Verfahrens.

In den Figuren werden gleiche oder funktionsgleiche Elemente mit den gleichen Bezugszeichen versehen.

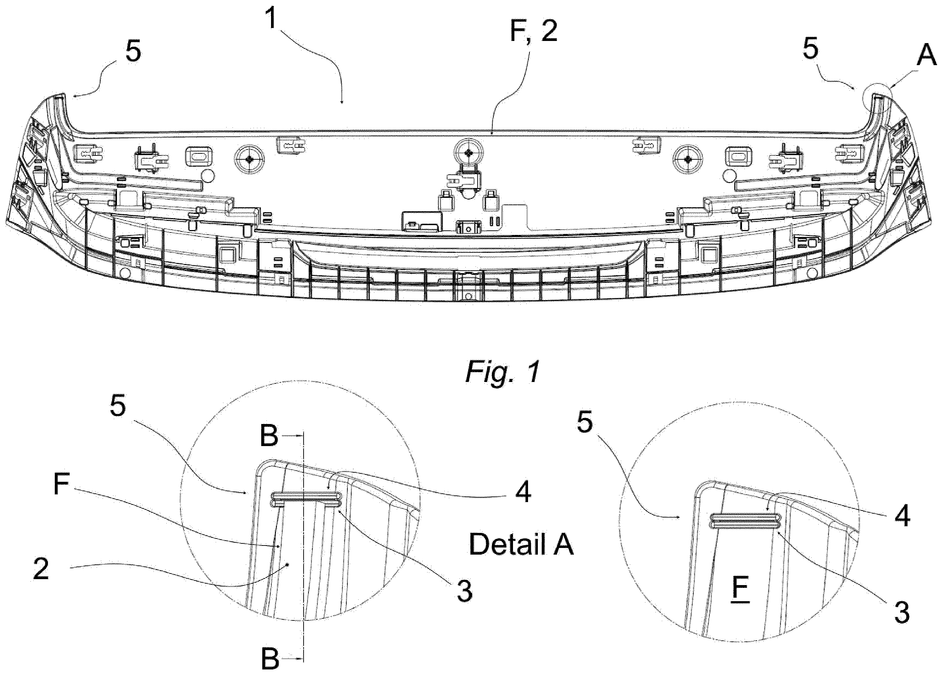

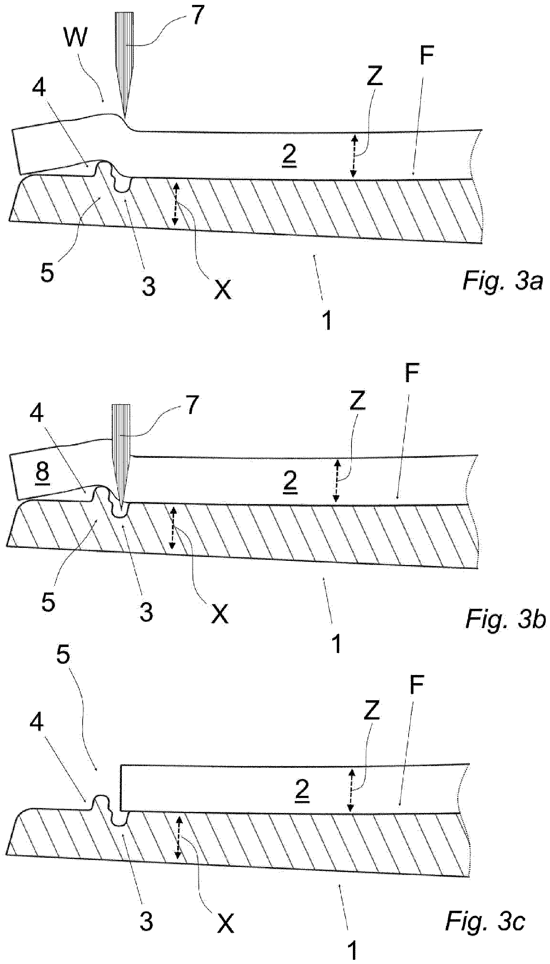

Die Fig. 1 zeigt eine Draufsicht auf ein als Verstärkungsteil für einen Spoiler (hier ein Heckspoiler) ausgebildetes Kunststoff-Bauteil für ein Kraftfahrzeug. Das Kunststoff-Bauteil für ein Kraftfahrzeug weist einen Grundkörper 1 mit einer Dicke X und mit einer frei zugänglichen Funktionsoberfläche F auf, die so ausgebildet ist, dass ein Klebeband 2 entlang dieser Funktionsoberfläche F aufklebbar und mit der Funktionsoberfläche F verbindbar ist. Der Grundkörper 1 weist im Bereich der Funktionsoberfläche F eine sich von der Funktionsoberfläche F nach innen in den Grundkörper 1 erstreckende rinnenförmige Ausnehmung 3 und eine sich von der Funktionsoberfläche F nach außen erstreckende stegförmige Ausformung 4 auf. Die Ausnehmung 3 und die Ausformung 4 grenzen aneinander an und sind einstückig mit dem Grundkörper 1 ausgebildet, sodass diese zusammen eine in den Grundkörper 1 integrierte Schnittschablone 5 für das Klebeband 2 bilden. In der linken vergrößerten Detaildarstellung des Details A ist das Klebeband 2 nach dem bereits erfolgten Zuschneiden erkennbar. Der Querschnitt entlang der Schnittlinie B-B wird in den nachfolgenden Fig. 3a bis Fig. 3c beschrieben. Die rechts dargestellte Detailvergrößerung des Details A zeigt den Grundkörper 1 bzw. die Funktionsoberfläche F des Grundkörpers 1, vor dem Aufkleben bzw. dem Verbinden des Klebebandes 2 mit der Funktionsoberfläche F. Das Klebeband 2 kann eine einseitige oder eine doppelseitige Klebefläche und/oder wenigstens eine Schaumschicht umfassen, je nachdem ob das Verstärkungsteil eine Dichtfunktion und/oder Dämmfunktion gegenüber der angrenzenden Karosserie oder der angrenzenden Spoileraußenschale übernehmen soll. Der Grundkörper 1 ist in einem Kunststoff-Spritzgussverfahren einstückig ausgebildet.

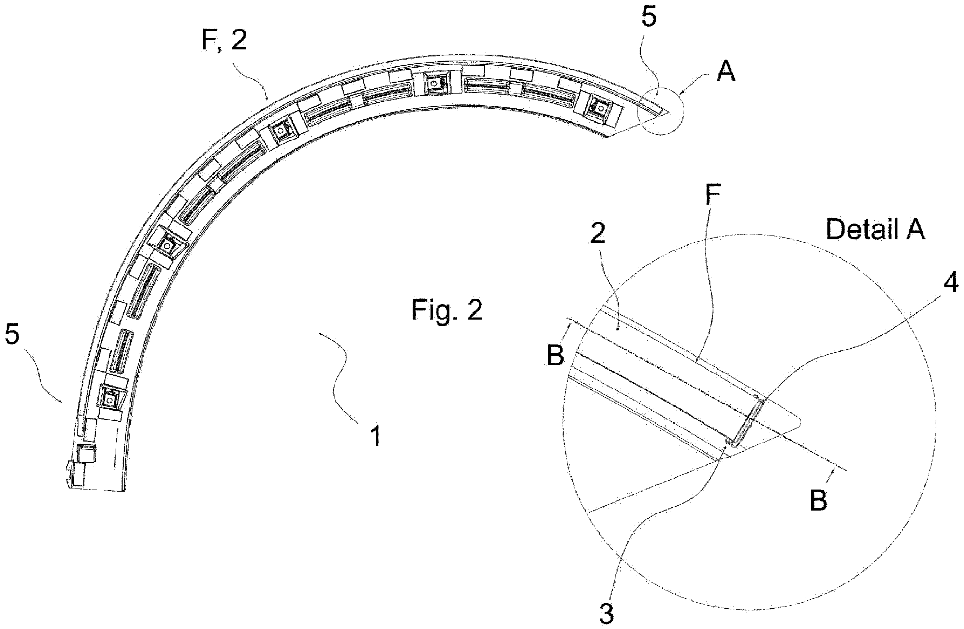

Die Fig. 2 zeigt eine Draufsicht auf ein Kunststoff-Bauteil für ein Kraftfahrzeug, welches als innenliegendes Verstärkungsteil für eine schalenförmige Radlaufblende ausgebildet ist. Das Kunststoff-Bauteil für ein Kraftfahrzeug weist einen Grundkörper 1 mit einer Dicke X und mit einer frei zugänglichen Funktionsoberfläche F, die so ausgebildet ist, dass ein Klebeband 2 entlang dieser Funktionsoberfläche F aufklebbar und mit der Funktionsoberfläche F verbindbar ist, auf. Der Grundkörper 1 weist im Bereich der Funktionsoberfläche F eine sich von der Funktionsoberfläche F nach innen in den Grundkörper 1 erstreckende rinnenförmige Ausnehmung 3 und eine sich von der Funktionsoberfläche F nach außen erstreckende Ausformung 4 auf. Die Ausnehmung 3 und die Ausformung 4 grenzen aneinander an und sind einstückig mit dem Grundkörper 1 ausgebildet, sodass diese zusammen eine in den Grundkörper 1 integrierte Schnittschablone 5 für das Klebeband 2 bilden. Das Klebeband 2 kann eine einseitige oder eine doppelseitige Klebefläche und/oder wenigstens eine Schaumschicht umfassen, je nachdem ob das Verstärkungsteil eine Dichtfunktion und/oder Dämmfunktion gegenüber dem angrenzenden Radlauf übernehmen soll. Der Grundkörper 1 ist in einem Kunststoff-Spritzgussverfahren einstückig ausgebildet. Der Querschnitt entlang der Schnittlinie B-B entspricht im Wesentlichen dem aus Fig. 1 und wird in den nachfolgenden Fig. 3a bis Fig. 3c beschrieben.

In den Fig. 3a bis Fig. 3c ist das erfindungsgemäße Verfahren zum Zuschneiden eines Klebebandes 2 auf einem Kunststoff-Bauteil für ein Kraftfahrzeug verdeutlicht. Die Fig. 3a bis Fig. 3c entsprechend hierbei den Querschnitten gemäß den Schnittlinien B-B in Fig. 1 und in Fig. 2. Das Verfahren ist wie folgt ausgebildet:
Verfahren zum Zuschneiden eines Klebebandes 2 auf einem Kunststoff-Bauteil für ein Kraftfahrzeug, wobei das Kunststoff-Bauteil einen Grundkörper 1 mit einer Dicke X und mit einer frei zugänglichen Funktionsoberfläche F, die so ausgebildet ist, das ein Klebeband 2 entlang dieser Funktionsoberfläche F aufklebbar und mit der Funktionsoberfläche F verbindbar ist, aufweist und wobei der Grundkörper 1 im Bereich der Funktionsoberfläche F eine sich von der Funktionsoberfläche F nach innen in den Grundkörper 1 erstreckende rinnenförmige Ausnehmung 3 und eine sich von der Funktionsoberfläche F nach außen erstreckende stegförmige Ausformung 4 aufweist, wobei die Ausnehmung 3 und die Ausformung 4 aneinander angrenzen und einstückig mit dem Grundkörper 1 ausgebildet sind, sodass diese zusammen eine in den Grundkörper 1 integrierte Schnittschablone 5 für das Klebeband 2 bilden wobei der Abstand zwischen der Ausnehmung (3) und der Ausformung (4) höchstens 15 mm beträgt.
umfassend die folgenden Schritte:
- Aufkleben eines Klebebandes 2 entlang der Funktionsoberfläche F und Verbinden des Klebebandes 2 mit der Funktionsoberfläche F, wobei das Klebeband 2 die Ausnehmung 3 und die Ausformung 4 überlappt,
- Positionieren einer Schneidvorrichtung 7 auf oder über dem Klebeband 2 oberhalb der Stelle der Ausnehmung 3 und neben der durch die Ausformung 4 verursachten und nach außen gerichteten Wölbung W des Klebebandes 2,
- Abtrennen des überlappenden Abschnitts 8 des Klebebandes 2 mittels der Schneidvorrichtung 7 durch die Verlagerung des Schneidelements der Schneidvorrichtung 7 bis in die Ausnehmung 3 hinein,
- Entfernen des abgetrennten überlappenden Abschnitts 8 des Klebebandes 2.

Das Kunststoff-Bauteil kann insbesondere wie vorstehend oder wie nachstehend beschrieben oder gemäß einem der Ansprüche 1 bis 8 ausgebildet sein.

In den Fig. 3a bis Fig. 3c ist zudem verdeutlicht, dass die Steghöhe der Ausformung 4 zwischen 20% bis 80%, vorzugsweise zwischen 30% bis 50% der Dicke Z des vorgesehenen Klebebandes 2 entspricht. Die Tiefe der rinnenförmigen Ausnehmung 3 entspricht zwischen 10% bis 80%, vorzugsweise zwischen 15% bis 60%, weiter vorzugsweise zwischen 20% bis 50% der Dicke X des Grundkörpers 1 vor der Ausnehmung 3. Das Klebeband 2 kann eine einseitige oder eine doppelseitige Klebefläche und/oder wenigstens eine Schaumschicht umfassen. Der Abstand zwischen der Ausnehmung 3 und der Ausformung 4 beträgt höchstens 15 mm, bevorzugt höchstens 10 mm, weiter bevorzugt höchstens 5 mm. Der Grundkörper 1 ist in einem Kunststoff-Spritzgussverfahren einstückig ausgebildet. Das Material des Grundkörpers 1 kann Polysulfon (PSU), Poly(ethersulfon) (PES), Polyetherimid (PEI), Poly(phenylensulfid) (PPS), Polyphenylensulfon (PPSU), Polyetheretherketon (PEEK), Polyetherketone (PEK), Polyamidimid (PAI), Poly-m-phenylenisophthalamid (PMI), Polyphthalamide (PPA), Polybenzimidazole (PBI), Polytetrafluorethylen (PTFE), Perfluoralkoxylalkan (PFA), Polyoxymethylen (POM), Polyamid (PA), Polyethylenterephthalat (PET), Polybutylenterephtalat (PBT), Polymethylmethacrylat (PMMA), Polystyrol (PS), Syndiotaktisches Polystyrol (sPS), Polycarbonat (PC), Styrol-Acrylnitril-Copolymer (SAN), Polyphenylenether (PPE), Ethylen-Propylen-Dien-Kautschuk (EPDM), Acrylnitril-Butadien-Styrol (ABS), Polylactat (PLA), Polyethylen (PE), Polypropylen (PP), Polyvinylchlorid (PVC) oder Mischungen der vorgenannten Materialen umfassen. Auf der dem Grundkörper 1 abgewandten Seite des Klebebands 2 kann zusätzlich ein Funktionselement, insbesondere ein Dichtungselement, aufgebracht oder einstückig angeformt sein.

Alternativ kann das Kunststoff-Bauteil eine Radlaufblende, eine Zierleiste, ein Zierelement, ein Türkantenschutz, ein Türunterkantenschutz, eine Abdeckleiste, eine Säulenblende, eine Seitenschutzleiste, eine Schwellerverkleidung, eine Stoßfängerverkleidung, eine Türverkleidung, eine Heckklappe, ein Kotflügel, ein Spoiler, eine Dachbeplankung, eine Halteschiene, eine Dichtungsleiste, eine Wasserkastenabdeckung, ein Verstärkungsteil für eine Zierleiste, ein Verstärkungsteil für ein Zierelement, ein Verstärkungsteil für einen Türkantenschutz, ein Verstärkungsteil für einen Türunterkantenschutz, ein Verstärkungsteil für eine Abdeckleiste, ein Verstärkungsteil für eine Säulenblende, ein Verstärkungsteil für eine Seitenschutzleiste, ein Verstärkungsteil für eine Schwellerverkleidung, ein Verstärkungsteil für eine Stoßfängerverkleidung, ein Verstärkungsteil für eine Türverkleidung, ein Verstärkungsteil für eine Heckklappe, ein Verstärkungsteil für einen Kotflügel, ein Verstärkungsteil für eine Dachbeplankung, ein Verstärkungsteil für eine Halteschiene, ein Verstärkungsteil für eine Dichtungsleiste oder ein Verstärkungsteil für eine Wasserkastenabdeckung sein.

## Patentansprüche

1. Kunststoff-Bauteil für ein Kraftfahrzeug, aufweisend
einen Grundkörper (1) mit einer Dicke (X) und mit einer frei zugänglichen Funktionsoberfläche (F) die so ausgebildet ist, dass ein Klebeband (2) entlang dieser Funktionsoberfläche (F) aufklebbar und mit der Funktionsoberfläche (F) verbindbar ist,
wobei der Grundkörper (1) im Bereich der Funktionsoberfläche (F) eine sich von der Funktionsoberfläche (F) nach innen in den Grundkörper (1) erstreckende rinnenförmige Ausnehmung (3) und eine sich von der Funktionsoberfläche (F) nach außen erstreckende stegförmige Ausformung (4) aufweist,
**dadurch gekennzeichnet, dass** die Ausnehmung (3) und die Ausformung (4) aneinander angrenzen und einstückig mit dem Grundkörper (1) ausgebildet sind, sodass diese zusammen eine in den Grundkörper (1) integrierte Schnittschablone (5) für das Klebeband (2) bilden
und der Abstand zwischen der Ausnehmung (3) und der Ausformung (4) höchstens 15 mm beträgt.

2. Kunststoff-Bauteil für ein Kraftfahrzeug nach Anspruch 1, **dadurch gekennzeichnet, dass** das Kunststoff-Bauteil eine Radlaufblende, eine Zierleiste, ein Zierelement, ein Türkantenschutz, ein Türunterkantenschutz, eine Abdeckleiste, eine Säulenblende, eine Seitenschutzleiste, eine Schwellerverkleidung, eine Stoßfängerverkleidung, eine Türverkleidung, eine Heckklappe, ein Kotflügel, ein Spoiler, eine Dachbeplankung, eine Halteschiene, eine Dichtungsleiste, eine Wasserkastenabdeckung, ein Verstärkungsteil für eine Radlaufblende, ein Verstärkungsteil für eine Zierleiste, ein Verstärkungsteil für ein Zierelement, ein Verstärkungsteil für einen Türkantenschutz, ein Verstärkungsteil für einen Türunterkantenschutz, ein Verstärkungsteil für eine Abdeckleiste, ein Verstärkungsteil für eine Säulenblende, ein Verstärkungsteil für eine Seitenschutzleiste, ein Verstärkungsteil für eine Schwellerverkleidung, ein Verstärkungsteil für eine Stoßfängerverkleidung, ein Verstärkungsteil für eine Türverkleidung, ein Verstärkungsteil für eine Heckklappe, ein Verstärkungsteil für einen Kotflügel, ein Verstärkungsteil für einen Spoiler, ein Verstärkungsteil für eine Dachbeplankung, ein Verstärkungsteil für eine Halteschiene, ein Verstärkungsteil für eine Dichtungsleiste oder ein Verstärkungsteil für eine Wasserkastenabdeckung ist.

3. Kunststoff-Bauteil für ein Kraftfahrzeug nach einem der vorstehenden Ansprüche, **dadurch gekennzeichnet, dass** die Tiefe der rinnenförmigen Ausnehmung (3) zwischen 10% bis 80%, vorzugsweise zwischen 15% bis 60%, weiter vorzugsweise zwischen 20% bis 50% der Dicke (X) des Grundkörpers (1) vor der Ausnehmung (3) entspricht.

4. Kunststoff-Bauteil für ein Kraftfahrzeug nach einem der vorstehenden Ansprüche, **dadurch gekennzeichnet, dass** die Steghöhe der Ausformung (4) zwischen 20% bis 80%, vorzugsweise zwischen 30% bis 50% der Dicke (Z) des vorgesehenen Klebebandes (2) entspricht.

5. Kunststoff-Bauteil für ein Kraftfahrzeug nach einem der vorstehenden Ansprüche, **dadurch gekennzeichnet, dass** der Abstand zwischen der Ausnehmung (3) und der Ausformung (4) höchstens 10 mm, weiter bevorzugt höchstens 5 mm beträgt.

6. Kunststoff-Bauteil für ein Kraftfahrzeug nach einem der vorstehenden Ansprüche, **dadurch gekennzeichnet, dass** der Grundkörper (1) in einem Kunststoff-Spritzgussverfahren einstückig ausgebildet ist.

7. Verfahren zum Zuschneiden eines Klebebandes (2) auf einem Kunststoff-Bauteil für ein Kraftfahrzeug, wobei das Kunststoff-Bauteil einen Grundkörper (1) mit einer Dicke (X) und mit einer frei zugänglichen Funktionsoberfläche (F), die so ausgebildet ist, dass ein Klebeband (2) entlang dieser Funktionsoberfläche (F) aufklebbar und mit der Funktionsoberfläche (F) verbindbar ist, aufweist und wobei der Grundkörper (1) im Bereich der Funktionsoberfläche (F) eine sich von der Funktionsoberfläche (F) nach innen in den Grundkörper (1) erstreckende rinnenförmige Ausnehmung (3) und eine sich von der Funktionsoberfläche (F) nach außen erstreckende stegförmige Ausformung (4) aufweist, wobei die Ausnehmung (3) und die Ausformung (4) aneinander angrenzen und einstückig mit dem Grundkörper (1) ausgebildet sind, sodass diese zusammen eine in den Grundkörper (1) integrierte Schnittschablone (5) für das Klebeband (2) bilden, wobei der Abstand zwischen der Ausnehmung (3) und der Ausformung (4) höchstens 15 mm beträgt,
umfassend die folgenden Schritte:
- Aufkleben eines Klebebandes (2) entlang der Funktionsoberfläche (F) und Verbinden des Klebebandes (2) mit der Funktionsoberfläche (F), wobei das Klebeband (2) die Ausnehmung (3) und die Ausformung (4) überlappt,
- Positionieren einer Schneidvorrichtung (7) auf oder über dem Klebeband (2) oberhalb der Stelle der Ausnehmung (3) und neben der durch die Ausformung (4) verursachten und nach außen gerichteten Wölbung (W) des Klebebandes (2),
- Abtrennen des überlappenden Abschnitts (8) des Klebebandes (2) mittels der Schneidvorrichtung (7) durch die Verlagerung des Schneidelementes der Schneidvorrichtung (7) bis in die Ausnehmung (3) hinein,
- Entfernen des abgetrennten überlappenden Abschnitts (8) des Klebebandes (2).

8. Verfahren zum Zuschneiden eines Klebebandes (2) nach Anspruch 7, **dadurch gekennzeichnet, dass** das Kunststoff-Bauteil nach einem der Ansprüche 1 bis 6 ausgebildet ist.

## Claims

1. A plastic component for a motor vehicle, comprising
a base body (1) with a thickness (X) and with a freely accessible functional surface (F) which is designed so that an adhesive tape (2) can be stuck along this functional surface (F) and can be connected to the functional surface (F),
wherein the base body (1) has in the region of the functional surface (F) a channel-like recess (3) extending inwards from the functional surface (F) into the base body (1) and a ridge-like shaped portion (4) extending outwards from the functional surface (F),
**characterised in that**
the recess (3) and the shaped portion (4) border each other and are formed in one piece with the base body (1) such that together they form a cutting template (5) for the adhesive tape (2), said cutting template (5) being integrated into the base body (1), and the distance between the recess (3) and the shaped portion (4) is no more than 15 mm.

2. The plastic component for a motor vehicle according to claim 1, **characterised in that** said plastic component is a wheel arch trim, a trim strip, a trim element, a door edge protector, a door bottom edge protector, a cover strip, a pillar finisher, a side protection strip, a sill cover, a bumper fascia, a door cladding, a tailgate, a mudguard, a spoiler, a roof panel, a retaining strip, a sealing strip, a water tray cover, a reinforcing part for a wheel arch trim, a reinforcing part for a trim strip, a reinforcing part for a trim element, a reinforcing part for a door edge protector, a reinforcing part for a door bottom edge protector, a reinforcing part for a cover strip, a reinforcing part for a pillar finisher, a reinforcing part for a side protection strip, a reinforcing part for a sill cover, a reinforcing part for a bumper fascia, a reinforcing part for a door cladding, a reinforcing part for a tailgate, a reinforcing part for a mudguard, a reinforcing part for a spoiler, a reinforcing part for a roof panel, a reinforcing part for a retaining strip, a reinforcing part for a sealing strip or a reinforcing part for a water tray cover.

3. The plastic component for a motor vehicle according to one of the preceding claims, **characterised in that** the depth of the channel-like recess (3) corresponds to between 10% and 80%, preferably between 15% and 60%, more preferably between 20% and 50%, of the thickness (X) of the base body (1) ahead of the recess (3).

4. The plastic component for a motor vehicle according to one of the preceding claims, **characterised in that** the ridge height of the ridge-like shaped portion (4) corresponds to between 20% and 80%, preferably between 30% and 50%, of the thickness (Z) of the adhesive tape (2) that is provided.

5. The plastic component for a motor vehicle according to one of the preceding claims, **characterised in that** the distance between the recess (3) and the shaped portion (4) is no more than 10 mm, more preferably no more than 5 mm.

6. The plastic component for a motor vehicle according to one of the preceding claims, **characterised in that** the base body (1) is formed in one piece in a plastic injection-moulding process.

7. A method for cutting an adhesive tape (2) to size on a plastic component for a motor vehicle, wherein the plastic component comprises a base body (1) with a thickness (X) and with a freely accessible functional surface (F) which is designed so that an adhesive tape (2) can be stuck along this functional surface (F) and can be connected to the functional surface (F), and wherein the base body (1) has in the region of the functional surface (F) a channel-like recess (3) extending inwardly from the functional surface (F) into the base body (1) and a ridge-like shaped portion (4) extending outwards from the functional surface (F), wherein the recess (3) and the shaped portion (4) border each other and are formed in one piece with the base body (1) such that together they form a cutting template (5) for the adhesive tape (2), said cutting template (5) being integrated into the base body (1), wherein the distance between the recess (3) and the shaped portion (4) is no more than 15 mm,
comprising the following steps:
- sticking an adhesive tape (2) along the functional surface (F) and connecting the adhesive tape (2) to the functional surface (F), wherein the adhesive tape (2) overlaps the recess (3) and the shaped portion (4),
- positioning a cutting device (7) on or over the adhesive tape (2) above the position of the recess (3) and next to the outwardly directed curvature (W) of the adhesive tape (2) caused by the ridge-like shaped portion (4),
- separating the overlapping section (8) of the adhesive tape (2) using the cutting device (7) by displacing the cutting element of the cutting device (7) into the recess,
- removing the separated overlapping section (8) of the adhesive tape (2).

8. The method for cutting an adhesive tape (2) to size according to claim 7, **characterised in that** the plastic component is configured according to one of claims 1 to 6.

## Revendications

1. Composant en matière plastique pour un véhicule automobile, présentant
un corps de base (1) avec une épaisseur (X) et avec une surface fonctionnelle (F) librement accessible, qui est réalisée de telle sorte qu'une bande adhésive (2) peut être collée le long de ladite surface fonctionnelle (F) et peut être reliée à la surface fonctionnelle (F),
dans lequel le corps de base (1) présente dans la zone de la surface fonctionnelle (F) un évidement (3) en forme de sillon s'étendant depuis la surface fonctionnelle (F) vers l'intérieur dans le corps de base (1) et une déformation (4) en forme d'entretoise s'étendant depuis la surface fonctionnelle (F) vers l'extérieur,
**caractérisé en ce que**
l'évidement (3) et la déformation (4) jouxtent l'un au niveau de l'autre et sont réalisés d'un seul tenant avec le corps de base (1) de sorte que ceux-ci forment conjointement un gabarit de coupe (5) intégré dans le corps de base (1) pour la bande adhésive (2), et la distance entre l'évidement (3) et la déformation (4) présente une valeur au maximum de 15 mm.

2. Composant en matière plastique pour un véhicule automobile selon la revendication 1, **caractérisé en ce que** le composant en matière plastique est un enjoliveur de passage de roue, une baguette décorative, un élément décoratif, une protection d'arête de portière, une protection d'arête inférieure de portière, une baguette de recouvrement, un panneau de pied-droit, une baguette de protection latérale, un habillage de seuil, un habillage de pare-chocs, un habillage de portière, un hayon, une aile, un spoiler, un panneau de toit, un rail de maintien, une baguette d'étanchéité, un recouvrement de bac d'eau, une partie de renfort pour un enjoliveur de passage de roue, une partie de renfort pour une baguette décorative, une partie de renfort pour un élément décoratif, une partie de renfort pour une protection d'arête de portière, une partie de renfort pour une protection d'arête inférieure de portière, une partie de renfort pour une baguette de recouvrement, une partie de renfort pour un panneau de pied-droit, une partie de renfort pour une baguette de protection latérale, une partie de renfort pour un habillage de seuil, une partie de renfort pour un habillage de pare-chocs, une partie de renfort pour un habillage de portière, une partie de renfort pour un hayon, une partie de renfort pour une aile, une partie de renfort pour un spoiler, une partie de renfort pour un panneau de toit, une partie de renfort pour un rail de maintien, une partie de renfort pour une baguette d'étanchéité ou une partie de renfort d'un recouvrement de bac d'eau.

3. Composant en matière plastique pour un véhicule automobile selon l'une quelconque des revendications précédentes, **caractérisé en ce que** la profondeur de l'évidement (3) en forme de sillon correspond entre 10 % à 80 %, de préférence entre 15 % à 60 %, davantage de préférence entre 20 % à 50 % de l'épaisseur (X) du corps de base (1) devant l'évidement (3).

4. Composant en matière plastique pour un véhicule automobile selon l'une quelconque des revendications précédentes, **caractérisé en ce que** la hauteur de nervure de la déformation (4) correspond entre 20 % à 80 %, de préférence entre 30 % à 50 % de l'épaisseur (Z) de la bande adhésive (2) prévue.

5. Composant en matière plastique pour un véhicule automobile selon l'une quelconque des revendications précédentes, **caractérisé en ce que** la distance entre l'évidement (3) et la déformation (4) présente une valeur de 10 mm au maximum, de manière davantage préférée de 5 mm au maximum.

6. Composant en matière plastique pour un véhicule automobile selon l'une quelconque des revendications précédentes, **caractérisé en ce que** le corps de base (1) est réalisé d'un seul tenant lors d'un procédé de moulage par injection de matière plastique.

7. Procédé servant à découper à la bonne longueur une bande adhésive (2) sur un composant en matière plastique pour un véhicule automobile, dans lequel le composant en matière plastique présente un corps de base (1) avec une épaisseur (X) et avec une surface fonctionnelle (F) librement accessible, qui est réalisée de telle sorte qu'une bande adhésive (2) peut être collée le long de ladite surface fonctionnelle (F) et peut être reliée à la surface fonctionnelle (F), et dans lequel le corps de base (1) présente dans la zone de la surface fonctionnelle (F) un évidement (3) en forme de sillon s'étendant depuis la surface fonctionnelle (F) vers l'intérieur dans le corps de base (1) et une déformation (4) en forme d'entretoise s'étendant depuis la surface fonctionnelle (F) vers l'extérieur, dans lequel l'évidement (3) et la déformation (4) jouxtent l'un au niveau de l'autre et sont réalisés d'un seul tenant avec le corps de base (1) de sorte que ceux-ci forment conjointement un gabarit de coupe (5) intégré dans le corps de base (1) pour la bande adhésive (2), dans lequel la distance entre l'évidement (3) et la déformation (4) présente une valeur de 15 mm au maximum,
comprenant les étapes suivantes :
- de collage d'une bande adhésive (2) le long de la surface fonctionnelle (F) et la liaison de la bande adhésive (2) à la surface fonctionnelle (F), dans lequel la bande adhésive (2) chevauche l'évidement (3) et la déformation (4),
- de positionnement d'un dispositif de découpage (7) sur ou par-dessus la bande adhésive (2) au-dessus de l'emplacement de l'évidement (3) et à côté du bombement (W), provoqué par la déformation (4) et dirigé vers l'extérieur, de la bande adhésive (2),
- de séparation de la section (8) de chevauchement de la bande adhésive (2) au moyen du dispositif de découpage (7) par le déplacement de l'élément de découpage du dispositif de découpage (7) jusqu'à l'intérieur de l'évidement (3),
- de retrait de la section (8) de chevauchement séparée de la bande adhésive (2).

8. Procédé servant à découper à la bonne longueur une bande adhésive (2) selon la revendication 7, **caractérisé en ce que** le composant en matière plastique est réalisé selon l'une quelconque des revendications 1 à 6.
